# EUROPÄISCHE PATENTSCHRIFT

(11) **EP 0 452 521 B1**
(45) Veröffentlichungstag und Bekanntmachung des Hinweises auf die Patenterteilung: **10.08.1994**
(21) Anmeldenummer: 90107273.6
(22) Anmeldetag: 17.04.1990
(51) Int. Cl.: B60R 21/32, B60R 22/46, H01H 35/14

(54) **Ansteuermechanismus für Rückstrammeinrichtungen in Fahrzeugen**
Triggering mechanism for tensioning devices in vehicles
Mécanisme de déclenchement pour dispositifs tendeurs dans des véhicules

(43) Veröffentlichungstag der Anmeldung: 23.10.1991
(73) Patentinhaber: TRW REPA GMBH, 73553 Alfdorf (DE)
(72) Erfinder: Föhl, Artur,, D-7060 Schorndorf (DE)
(74) Vertreter: Degwert, Hartmut, Dipl.-Phys.

(56) Entgegenhaltungen:
- BE-A- 524 187
- DE-A- 3 032 201
- DE-A- 3 234 422
- FR-A- 2 374 188

## Beschreibung

Die Erfindung betrifft einen Ansteuermechanismus für Rückstrammeinrichtungen eines Sicherheitsgurt-Rückhaltesystems oder für Gassack-Rückhaltesysteme in Fahrzeugen, mit einer in einem Gehäuse angeordneten, fahrzeugsensitiven Trägheitsmasse und einem Ansteuerelement, das mit dem Rückhaltesystem in Wirkverbindung steht.

Für die Ansteuerung von Rückstrammeinrichtungen eines Sicherheitsgurt-Rückhaltesystems oder eines Gassack-Rückhaltesystems in Fahrzeugen wird eine Auslösevorrichtung benötigt. Besonders leistungsfähig sind elektrische Ansteuersysteme, die über eine aufwendige Elektronik verfügen, welche die Fahrzeugverzögerung auswertet. Die in einem Fahrzeug beim Aufprall auftretenden Verzögerungswerte können je nach Fahrzeugtyp sehr unterschiedlich sein. Jedes Fahrzeug besitzt seine eigene "Crash-Kurve", welche den Verlauf der Verzögerungswerte über die Zeit wiedergibt. Um eine unbeabsichtigte Auslösung zu verhindern, werden nur Verzögerungswerte berücksichtigt, die einen bestimmten Schwellwert von beispielsweise 4 g überschreiten. Kurzzeitige Verzögerungsspitzen, wie sie durch Stoße oder dgl. auftreten können, dürfen nicht zu einer Auslösung führen. Daher werden die gemessenen Verzögerungswerte über die Zeit integriert. Die Auslösung erfolgt erst bei einem bestimmten Wert des Integrals, der von Fahrzeug zu Fahrzeug verschieden sein kann. Mittels elektronischer Schaltungen ist es ohne Schwierigkeiten möglich, die Auslösung genau bei einem bestimmten Wert des Integrals zu veranlassen. Auch bereitet es keine Schwierigkeiten, die Auslösekriterien einer gegebenen Elektronikschaltung an geänderte Umstände oder Fahrzeugtypen anzupassen.

Für jedes elektrisch angesteuerte Rückstrammsystem oder Gassack-Rückhaltesystem wird aber eine eigene elektrische Ansteuerleitung benötigt, was einen erheblichen Material- und Montageaufwand zur Folge hat.

Kostenmäßig günstig sind mechanische Ansteuersysteme, die jeder Rückstrammeinrichtung bzw. jedem Gassack-Rückhaltesystem individuell räumlich und funktionell zugeordnet werden können.

So zeigt die gattungsbildende DE-A-32 34 422 einen solchen Ansteuermechanismus, bei dem ein translationsverschiebbares, federbeaufschlagtes Schlagstück von einer translationsverschiebbaren Trägheitsmasse über eine Sperrkugel in Richtung auf ein Ansteuerelement der Rückstrammeinrichtung freigegeben wird.

Die herkömmlichen mechanischen Ansteuersysteme sind jedoch in ihren Auslösekriterien schwer beherrschbar und kaum in zuverlässig reproduzierbarer Weise sowie mit ausreichender Langzeitstabilität an die jeweiligen Einsatzbedingungen anpaßbar.

Der Erfindung liegt die Aufgabe zugrunde, einen Ansteuermechanismus für Rückstrammeinrichtungen eines Sicherheitsgurt-Rückhaltesystems oder für Gassack-Rückhaltesysteme in Fahrzeugen zur Verfügung zu stellen, dessen Ansteuerkriterien genau und langfristig reproduzierbar eingestellt werden können.

Diese Aufgabe wird bei einem Ansteuermechanismus der eingangs angegebenen Art erfindungsgemäß dadurch gelöst, daß ein im Gehäuse schwenkbar reibungsarm gelagertes und in Richtung des Ansteuerelementes federbeaufschlagtes Schlagstück zur Betätigung dieses Ansteuerelementes vorgesehen ist, daß die Trägheitsmasse im Gehäuse reibungsarm schwenkbar gelagert ist, daß sich das Schlagstück über eine leichtgängig an ihm gelagerte Rolle auf einer Kurvenfläche an der Trägheitsmasse abstützt, daß das Gehäuse hermetisch abgedichtet ist und daß im Inneren des Gehäuses eine feuchtigkeitsabsorbierende hygroskopische Substanz angeordnet ist. Die Erfindung geht von dem Gedanken aus, daß die Auslösekriterien für den Ansteuermechanismus durch Gestaltung der Kruvenfläche eingestellt werden können. Eine feinfühlige Abtastung der Kurvenfläche durch die Rolle wird erreicht, indem diese Rolle leichtgängig, insbesondere mittels eines Wälzlagers, an dem Schlagstück gelagert wird. Auch die Trägheitsmasse sowie das Schlagstück werden vorzugsweise auf einem Wälzlager leichtgängig gelagert. Damit nun die präzise und leichtgängige Lagerung dieser Funktionsteile auch langfristig über Zeiträume von 10 Jahren und mehr erhalten bleibt, ist das Gehäuse hermetisch nach außen abgedichtet. Ferner ist vorzugsweise im Inneren des Gehäuses eine hygroskopische Substanz angeordnet, die eine Ansammlung von Feuchtigkeit in dem Gehäuse verhindert und somit Korrosion vorbeugt.

Gemäß einer vorteilhaften Weiterbildung der Erfindung ist vorgesehen, daß die Gestalt der Kurvenfläche, die Bewegungsbahn der Rolle bei einer Schwenkbewegung des federbeaufschlagten Schlagstücks sowie die Bewegungsrichtung der Trägheitsmasse so aufeinander abgestimmt sind, daß:
- das Schlagstück in einer stabilen Bereitschaftsstellung im Abstand von dem Ansteuerelement gehalten ist, solange an der Trägheitsmasse keine einen vorbestimmten Wert überschreitenden Verzögerungskräfte auftreten;
- die Rolle auf der Kurvenfläche der Trägheitsmasse entgegen der Federbeaufschlagung des Schlagstücks abrollt, wenn an der Trägheitsmasse Verzögerungskräfte auftreten, die den vorbestimmten Wert überschreiten, und das Schlagstück bei Nachlassen der Verzögerungskräfte wieder in seine stabile Bereitschaftsstellung zurückkehrt, indem die Rolle auf der Kurvenfläche in entgegengesetzter Richtung abrollt; und
- unter der Wirkung von Verzögerungskräften an der Trägheitsmasse, deren Betrag den vorbestimmten Wert überschreitet und deren Integral über die Zeit einen vorbestimmten Geschwindigkeitsverlust ergibt, die Rolle auf der Kurvenfläche einen Punkt überwindet, jenseits von welchem ein Übertotpunkteffekt eintritt, durch den die Trägheitsmasse das Schlagstück plötzlich zur Betätigung des Ansteuerelementes freigibt.

Vergleicht man diese Ausführungsform des Ansteuermechanismus mit einem elektronischen Auslösesystem, so entspricht der vorbestimmte Wert der Verzögerungskräfte der Schwelle, ab welcher bei einem elektronischen System die Integration beginnt. Ein elektronisches System errechnet aus dem vorgegebenen Geschwindigkeitsverlust und der auftretenden Verzögerung den Auslösezeitpunkt. Der vorbestimmte Verzögerungswert sowie der vorbestimmte Geschwindigkeitsverlust können allein durch die Gestaltung der Kurvenfläche bestimmt werden. An ihrem einen Ende weist die Kurvenfläche vorzugsweise eine Endbegrenzung auf, an der die Rolle des Schlagstücks in der Bereitschaftsstellung anliegt. An diese Endbegrenzung schließt vorzugsweise ein erster Abschnitt der Kurvenfläche an, auf welchem die Rolle unter dem Einfluß von an der Trägheitsmasse auftretenden Verzögerungskräften einen Widerstand überwinden muß, welcher dem vorbestimmten Wert entspricht, damit sich die Rolle auf dem darauffolgenden Abschnitt der Kurvenfläche weiterbewegen kann. Dieser darauffolgende Abschnitt der Kurvenfläche zeichnet sich dadurch aus, daß die Rolle sich nur unter dem Einfluß von den vorbestimmten Wert überschreitenden Verzögerungskräften weiterbewegt, bei darunter absinkenden Verzögerungskräften aber zurück in Richtung ihrer Bereitschaftsstellung rollt. Die Steilheit dieses Abschnittes der Kurvenfläche ist gering und so bemessen, daß die Rolle gegen nahezu gleichbleibenden oder stetig zunehmenden Widerstand weiterrollt und bei nachlassenden Verzögerungskräften auf der Kurvenfläche zurückrollt. Erst wenn das Ende dieses Abschnitts der Kurvenfläche erreicht ist, tritt ein Übertotpunkteffekt ein, der bei praktischen Ausführungsformen dadurch erreicht wird, daß die Kurvenfläche mit einem abrupten Rücksprung endet.

Ein nahezu konstanter Widerstand, gegen den die Rolle sich auf der Kurvenfläche weiterbewegt, wird bei Ausführungsformen mit einem schwenkbaren Ansteuerelement durch eine Kurvenfläche erreicht, die einer archimedischen Spirale von geringer Steigung entspricht.

Mehrere vorteilhafte Ausführungsformen der Erfindung sind in den Unteransprüchen angegeben.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: einen schematischen Schnitt einer ersten Ausführungsform des Ansteuermechanismus im Bereitschaftszustand;
- Fig. 2: eine Schnittansicht desselben Ansteuermechanismus im ausgelösten Zustand;
- Fig. 3: einen Schnitt einer zweiten Ausführungsform des Ansteuermechanismus im Bereitschaftszustand;
- Fig. 4: einen Schnitt einer dritten Ausführungsform des Ansteuermechanismus;
- Fig. 5: eine vergrößerte schematische Darstellung einer Steuerkurve am Auslöseelement des Ansteuermechanismus; und
- Fig. 6: ein Diagramm, das eine typische Crash-Kurve zeigt.

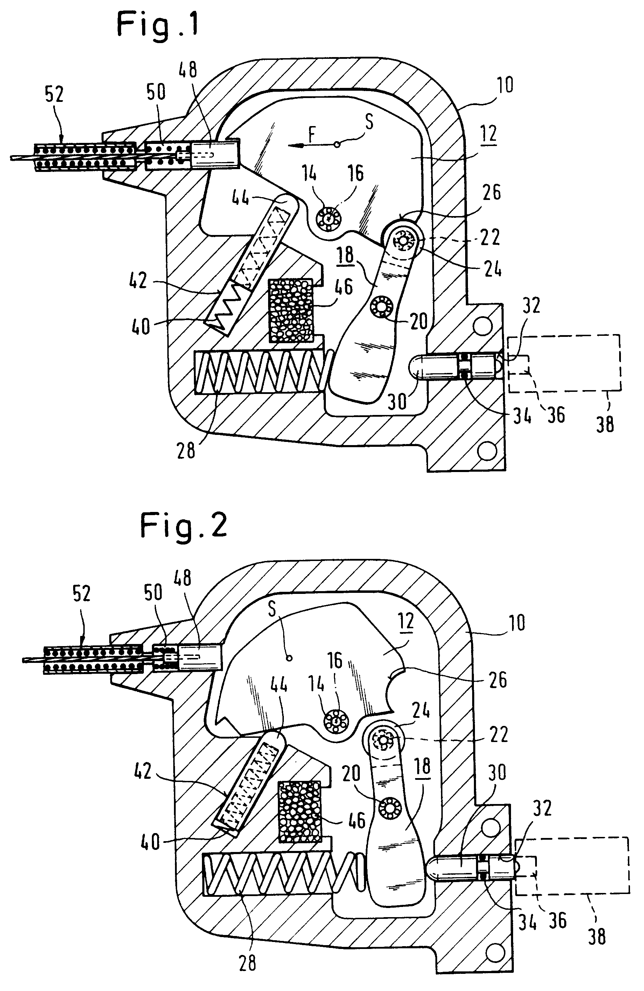

Bei der in den Fig. 1 und 2 gezeigten Ausführungsform des Ansteuermechanismus ist in einem nach außen hermetisch abgedichteten Gehäuse 10 eine fahrzeugsensitive Trägheitsmasse 12 auf einem Wälzlager 14 leichtgängig schwenkbar um eine Achse 16 gelagert. Der Schwerpunkt S der Trägheitsmasse 12 liegt im Einbauzustand des Gehäuses 10 zumindest annähernd senkrecht über der Achse 16, um Einflüsse durch in Vertikalrichtung wirkende Stöße weitgehend auszuschalten. Ferner ist in dem Gehäuse 10 ein Schlagstück 18 in Form eines doppelarmigen Hebels mittels eines Wälzlagers 20 schwenkbar gelagert. das Schlagstück 18 ist am freien Ende seines der Trägheitsmasse 12 zugewandten Hebelarmes mit einer auf einem Wälzlager 22 leichtgängig drehbar gelagerten Rolle 24 versehen. Diese Rolle 24 stützt sich an ihrem Umfang auf einer Kurvenfläche 26 der Trägheitsmasse 12 ab. Der andere Hebelarn des Schlagstücks 18 wird durch eine Druckfeder 28 in Richtung zu einem Schlagbolzen 30 hin beaufschlagt, der in einer Bohrung 32 des Gehäuses 10 verschiebbar gelagert ist, wobei die Abdichtung des Gehäuses 10 durch einen O-Ring 34 gewährleistet ist. der Schlagbolzen 30 ragt in das Innere des Gehäuses 10 hinein. Er wirkt bei der hier gezeigten Ausführungsform mit dem Schlagzünder 36 eines pyrotechnischen Gasgenerators 38 zusammen, der seinerseits zur Aktivierung einer (nicht gezeigten) Rückstrammeinrichtung vorgesehen ist. Die Trägheitsmasse 12 steht bei der gezeigten Ausführungsform unter der Wirkung einer Rückstellfeder 40, die in einer Bohrung 42 des Gehäuses 10 aufgenommen ist und auf einen Stößel 44 drückt, der sich mit einem abgerundeten Kopfstück auf der ihm gegenüberliegenden Fläche der Trägheitsmasse 12 abstützt. Eine feuchtigkeitsabsorbierende, hygroskopische Substanz 46 ist in einer Aussparung im Inneren des Gehäuses 10 angeordnet. In dem in Fig. 1 gezeigten Zustand befindet sich die Trägheitsmasse 12 in einer stabilen Bereitschaftsstellung, in der sie durch einen Schieber 48 gehalten wird, der in einer Bohrung 50 des Gehäuses 10 geführt ist und über einen Seilzug 52 betätigt wird. Die durch den Schieber 50 bewirkte Arretierung der Trägheitsmasse 12 in ihrer Bereitschaftsstellung ist nur in bestimmten Betriebszuständen wirksam. Beispielsweise kann der in Fig. 1 gezeigte Ansteuermechanismus unmittelbar an einem Fahrzeugsitz angeordnet werden, um eine in den Sitz integrierte Rückstrammeinrichtung anzusteuern. Bei einer Sitzverstellung können Stöße von erheblicher Intensität nicht ausgeschlossen werden. Wenn der Schieber 50 über den Seilzug 52 an den Sitzverstellungshebel angekoppelt wird, kann die Trägheitsmasse 12 in ihrer Bereitschaftsstellung gesichert werden, um eine Sitzverstellung ohne jegliche Gefahr einer unbeabsichtigten Auslösung der Rückstrammeinrichtung zu ermöglichen. Auch im Bereich der Hereinführung des Seilzuges 52 in das Gehäuse 10 sind Maßnahmen zur hermetischen Abdichtung nach außen vorgesehen.

Wenn der Schieber 48, wie in Fig. 2 gezeigt, die Trägheitsmasse 12 freigibt, verbleibt diese dennoch in ihrer stabilen Bereitschaftslage, da die Kurvenfläche 26, auf der sich die Rolle 24 abstützt, eine solche Neigung in bezug auf die durch das Schlagstück 18 umgelenkte und übersetzte Kraft der Feder 28 aufweist, daß die Trägheitsmasse 12 bestrebt ist, im Uhrzeigersinn (in Fig. 1) zu verschwenken. Dieses Bestreben kann durch die Feder 40 noch unterstützt werden. Eine Verschwenkung der Trägheitsmasse 12 im Uhrzeigersinn ist aber nicht möglich, weil die Kurvenfläche 26 eine steile Endbegrenzung aufweist, deren Fläche quer zur Längsachse des Schlagstücks 18 orientiert ist.

Wenn nun unter der Wirkung einer Fahrzeugverzögerung Trägheitskräfte am Schwerpunkt S der Trägheitsmasse angreifen, wie in Fig. 1 durch einen Pfeil F angedeutet, und wenn diese Trägheitskräfte einen vorbestimmten Wert überschreiten, beginnt die Trägheitsmasse 12, sich entgegen der Wirkung der Feder 40 sowie der Feder 28 entgegen dem Uhrzeigersinn zu verschwenken, wobei die Rolle 24 auf der Kurvenfläche 26 gegen nahezu konstanten Widerstand abrollt. Dauern die Verzögerungskräfte an, bis ein vorbestimmter Geschwindigkeitsverlust eingetreten ist, so bewegt sich die Rolle 24 auf der Kurvenfläche 26 bis zu einem Endpunkt dieser Kurvenfläche, an dem diese einen abrupten Rücksprung in Richtung der Achse 16 bildet. Es tritt dann ein Übertotpunkteffekt ein, indem die Rolle 24 plötzlich freigegeben wird und das Schlagstück 18 ohne jede Behinderung durch die Feder 28 beschleunigt wird. Die recht stark bemessene Feder 28 beschleunigt das Schlagstück 18 auf einem Schwenkweg von wenigen Winkelgraden in solchem Maße, daß dieses mit hoher kinetischer Energie auf dem Schlagbolzen 30 auftrifft und diesen in den Schlagzünder 36 des pyrotechnischen Gasgenerators 38 eintreibt.

Wenn aber während dieses Vorganges die Verzögerungskräfte unter den vorbestimmten Wert absinken, so rollt die Rolle 24 auf der Kurvenfläche 26 zurück in Richtung der stabilen Bereitschaftsstellung.

Bei der beschriebenen Ausführungsform des Ansteuermechanismus wird durch die Anwesenheit der Feder 40 und die Steilheit der Kurvenfläche ein bestimmter Schwellwert definiert, der überwunden werden muß, bevor die Abrollbewegung der Rolle 24 auf der Kurvenfläche 26 beginnt. Auf eine solche Feder kann aber verzichtet werden, wenn die Kurvenfläche 26 in geeigneter Weise gestaltet wird.

Bei der Ausführungsform nach den Fig. 1 und 2 bildet die Trägheitsmasse 12 zugleich ein Auslöseelement, wodurch eine kompakte Bauform des gesamten Ansteuermechanismus erzielt wird. Allerdings ist bei dieser Ausführungsform die Orientierung des Gehäuses 10 im Raume innerhalb enger Grenzen vorgegeben.

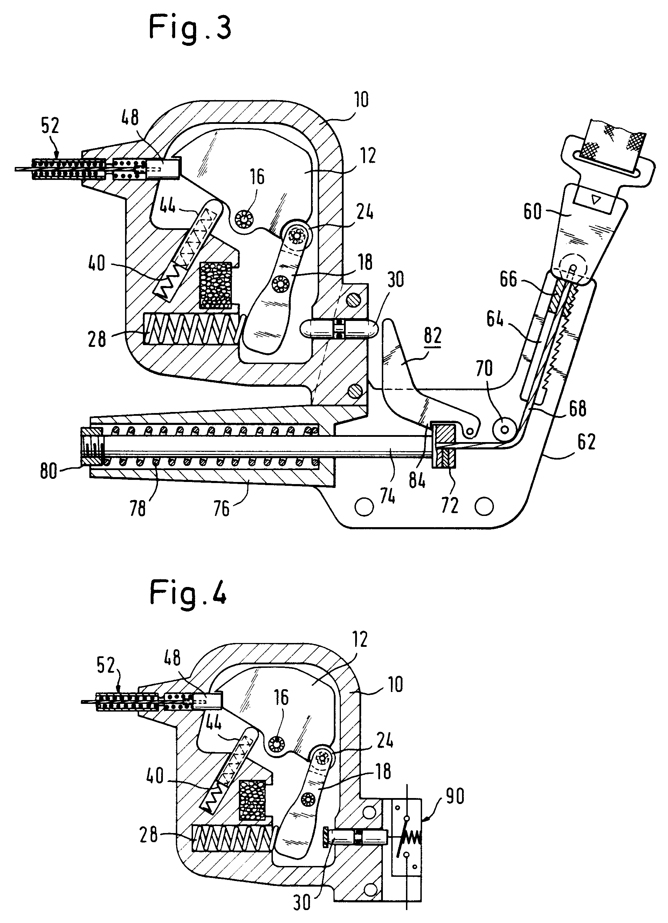

Bei der in Fig. 3 gezeigten Ausführungsform ist der Ansteuermechanismus nach den Fig. 1 und 2 einer rein mechanisch arbeitenden Rückstrammeinrichtung zugeordnet. Diese mechanische Rückstrammeinrichtung ist zur vereinfachten Darstellung in anderem Maßstab als der Ansteuermechanismus gezeigt. Sie ist konstruktiv so ausgebildet, daß sie in einen Fahrzeugsitz integriert werden kann. Es handelt sich um einen sogenannten Schloßstraffer, bei dem das Gurtschloß im Rückstrammfalle um eine bestimmte Strecke abwärts in Richtung des Fahrzeugbodens verlagert wird. Das Gurtschloß 60 ist zu diesem Zweck an einer Montageplatte 62 geführt, die am Fahrzeugsitz befestigt ist und einen Führungsschlitz 64 für das Gurtschloß 60 aufweist. Der Führungsschlitz 64 ist auf einer Seite mit einer Sperrverzahnung versehen, die mit einer entsprechenden Verzahnung an einem Führungsstück 66, an dem das Gurtschloß 60 befestigt ist, als Rücklaufsperre zusammenwirkt. Das eine Ende eines Zugseiles 68 greift an dem Gurtschloß 60 an. Das andere Ende des Zugseils 62 ist über eine Umlenkrolle 70 geführt und an einem Kopfstück 72 am Ende einer Stange 74 befestigt. Die Stange erstreckt sich durch einen Zylinder 76, in dem eine stark dimensionierte Druckfeder 78 im gespannten Zustand aufgenommen ist. Die Druckfeder 78 stützt sich mit ihrem einen Ende am Boden des Zylinders 76 und ihrem anderen Ende an einem aufgeschraubten Kopfstück 80 am freien Ende der Stange 74 ab. Die Druckfeder 78 ist also bestrebt, die Stange 74 in der Fig. 3 nach links zu bewegen. Die Stange 74 wird jedoch in der in Fig. 3 gezeigten Bereitschaftsstellung durch einen Sperrhebel 82 gehalten, der an seinem einen Ende an der Montageplatte 62 schwenkbar gelagert ist, mit einer Arretiernase 84 das Kopfstück 72 hintergreift und mit seinem abgewinkelten freien Ende dem äußeren Ende des Schlagbolzens 30 in geringem Abstand gegenüberliegt. Es ist ohne weiteres ersichtlich, daß der Schlagbolzen 30, wenn er gegen das Ende dieses Sperrhebels 82 anstößt, diesen im Uhrzeigersinn verschwenkt, so daß er das Kopfstück 72 freigibt, woraufhin die Druckfeder 78 die Stange 74 über den vorgesehenen Betätigungshub in der Zeichnung nach links verschiebt, wodurch das Gurtschloß 60 über das Zugseil 68 abwärts verlagert und der Sicherheitsgurt gestrafft wird.

Bei der in Fig. 4 gezeigten Ausführungsform ist der Schlagbolzen 30 des Ansteuermechanismus zur Betätigung eines elektrischen Schalters 90 vorgesehen, der in Fig. 4 nur schematisch gezeigt ist, da verschiedenste Schalterausführungen möglich sind. Über diesen Schalter 90 kann eine beliebige Sicherungsfunktion ausgelöst werden.

Bei beiden Ausführungsformen wird durch die hermetische Abdichtung des Gehäuses 10 in Verbindung mit der feuchtigkeitsabsorbierenden Wirkung der hygroskopischen Substanz 46 eine hohe Langzeitkonstanz der Einstellung der Auslösekriterien erreicht. Die leichtgängige und präzise Lagerung aller kritischen Funktionsteile kann so durch keinerlei Verunreinigung, Korrosion oder dgl. beeinträchtigt werden.

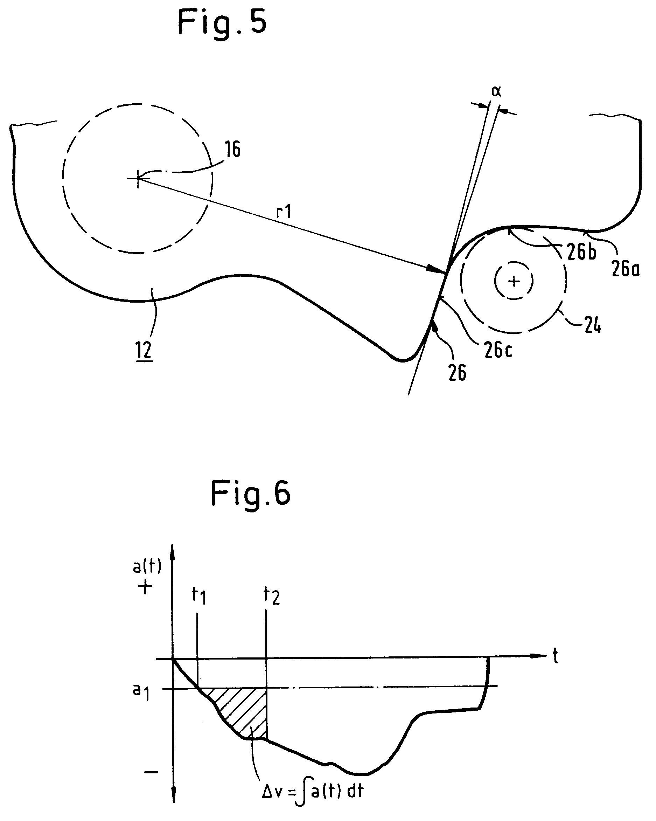

Unter Bezugnahme auf die Fig. 5 und 6 werden nun Einzelheiten zur Gestaltung der Kurvenfläche 26 im Hinblick auf die Einstellung des gewünschten Auslöseverhaltens erläutert.

Die Fig. 5 zeigt in vergrößertem Maßstab den Teil der Trägheitsmasse 12, an dem die Kurvenfläche 26 gebildet ist. Diese Kurvenfläche 26 weist an ihrem einen Ende eine Endbegrenzung 26a für die Rolle 24 auf. An diese Endbegrenzung 26a schließt ein konkaver Abschnitt 26b der Kurvenfläche an. Etwa ab einem Punkt, der durch einen Radius r1 in bezug auf die Schwenkachse 16 der Trägheitsmasse 12 bestimmt ist, geht die Kurvenfläche in einen Abschnitt 26c über, der durch eine archimedische Spirale beschrieben wird. In jedem Punkt der Kurvenfläche auf diesem Abschnitt 26c bildet diese Fläche mit einer Tangente an den Kreis mit dem entsprechenden Radius einen Winkel α von annähernd gleicher Größe. Es wird daran erinnert, daß in jedem Punkt einer archimedischen Spirale der Radiusvektor und Polarwinkel einander proportional sind. Eine gleichförmige Drehung der Trägheitsmasse 12 um ihre Achse 16 bewirkt daher auf dem Abschnitt 26c der Kurvenfläche eine gleichförmige Bewegung der Rolle 24 in Radialrichtung. Die Rolle 24 läuft daher auf der Kurvenfläche 26 gegen stetig, aber schwach wachsenden Widerstand, wenn sich die Trägheitsmasse 12 unter der Wirkung von anwachsenden Verzögerungen entgegen dem Uhrzeigersinn dreht. Die an jedem Punkt der Kurvenfläche 26 vorhandene Neigung gegenüber einer Tangentialen an den Kreis mit entsprechendem Radius bewirkt aber, daß die Rolle 24 bestrebt ist, in ihre stabile Anfangsstellung zurückzurollen, sobald die am Schwerpunkt der Trägheitsmasse wirksamen Trägheitskräfte nachlassen.

Erst wenn die Rolle 24 das Ende des Abschnitts 26c der Kurvenfläche erreicht hat, tritt ein Übertotpunkteffekt ein, da die Kurvenfläche von der Rolle zurückweicht und ihre durch die Feder 28 beschleunigte Schwenkbewegung freigibt.

Die Fig. 6 zeigt vereinfacht eine typische "Crash-Kurve"_{,} also die zeitliche Entwicklung der bei einem Fahrzeugaufprall auftretenden Verzögerungswerte. Bis zu einem Zeitpunkt t₁ bleibt die Verzögerung im Betrag unterhalb einem Wert a₁. Erst ab diesem Verzögerungswert a₁ soll die Trägheitsmasse 12 unter der Wirkung der entsprechenden Trägheitskräfte mit ihrer Schwenkbewegung beginnen. Dieser Verzögerungswert a₁ wird durch die Steilheit der Kurvenfläche 26 und gegebenenfalls durch die Feder 40 (Fig. 1, 2) eingestellt. Die Schwenkbewegung der Trägheitsmasse 12 entgegen dem Uhrzeigersinn dauert an, solange der Verzögerungswert a₁ im Betrag überschritten wird. Sinkt die Verzögerung unter den Wert a₁ ab, erfolgt die Schwenkbewegung der Trägheitsmasse 12 in entgegengesetzter Richtung. Bleibt der Betrag der Verzögerung aber bis zu einem Zeitpunkt t₂ oberhalb des Wertes a₁, so ist ein vorbestimmter Geschwindigkeitsverlust Δv eingetreten, und die Trägheitsmasse 12 wird bis zur Überschreitung ihrer Übertotpunktlage verschwenkt. Dieser Geschwindigkeitsverlust Δv ist der Wert des Integrals der den vorbestimmten Wert a₁ überschreitenden Verzögerung über die Zeit. Er beträgt typischerweise zwischen 0,5 und 1,0 m/sec., je nach Fahrzeugtyp.

Während der Rollbewegung der Rolle 24 auf dem Abschnitt 26c der Kurvenfläche erfolgt nur eine sehr kleine Schwenkbewegung des Schlagstücks 18. Die Rolle 24 wird daher mit annähernd konstanter Kraft durch die Feder 28 gegen die Kurvenfläche gedrückt. Durch die Neigung der Kurvenfläche wird diese nahezu konstante Andruckkraft in eine ebenfalls nahezu konstante Rückstellkraft umgesetzt, die bestrebt ist, die Trägheitsmasse 12 in ihre Ruhelage zurückzuschwenken. Sobald aber und solange die am Schwerpunkt S der Trägheitsmasse 12 angreifenden Trägheitskräfte diese Rückstellkraft überwinden, wird die Trägheitsmasse entgegen dem Uhrzeigersinn verschwenkt.

Bei den oben beschriebenen Ausführungsformen wird davon ausgegangen, daß die Steuerkurve an der Trägheitsmasse gebildet und die Rolle am Schlagstück gelagert ist. Grundsätzlich kann die Steuerkurve auch am Schlagstück gebildet und die Rolle an der Trägheitsmasse gelagert sein.

## Patentansprüche

1. Ansteuermechanismus für Rückstrammeinrichtungen eines Sicherheitsgurt-Rückhaltesystems oder für Gassack-Rückhaltesysteme in Fahrzeugen, mit einer in einem Gehäuse angeordneten, fahrzeugsensitiven Trägheitsmasse und einem Ansteuerelement, das mit dem Rückhaltesystem in Wirkverbindung steht, dadurch gekennzeichnet, daß ein im Gehäuse (10) schwenkbar reibungsarm gelagertes und in Richtung des Ansteuerelementes (30) federbeaufschlagtes Schlagstück (18) zur Betätigung dieses Ansteuerelementes (30) vorgesehen ist, daß die Trägheitsmasse (12) im Gehäuse (10) reibungsarm schwenkbar gelagert ist, daß sich das Schlagstück (18) über eine leichtgängig an ihm gelagerte Rolle (24) auf einer Kurvenfläche (26) an der Trägheitsmasse (12) abstützt, und daß das Gehäuse (10) hermetisch abgedichtet ist.

2. Ansteuermechanismus nach Anspruch 1, dadurch gekennzeichnet, daß im Inneren des Gehäuses (10) eine feuchtigkeitsabsorbierende hygroskopische Substanz (46) angeordnet ist.

3. Ansteuermechanismus nach Anspruch 1 oder 2, dadurch gekennzeichnet, daß die Gestalt der Kurvenfläche (26), die Bewegungsbahn der Rolle (24) bei einer Schwenkbewegung des federbeaufschlagten Schlagstücks (18) und die Bewegungsrichtung der Trägheitsmasse (12) so aufeinander abgestimmt sind, daß:
- das Schlagstück (18) in einer stabilen Bereitschaftsstellung im Abstand von dem Ansteuerelement (30) gehalten ist, solange an der Trägheitsmasse (12) keine einen vorbestimmten Wert überschreitenden Verzögerungskräfte auftreten;
- die Rolle (24) auf der Kurvenfläche (26) der Trägheitsmasse (12) entgegen der Federbeaufschlagung des Schlagstücks (18) abrollt, wenn an der Trägheitsmasse (12) Verzögerungskräfte auftreten, die den vorbestimmten Wert überschreiten, und das Schlagstück (18) bei Nachlassen der Verzögerungskräfte wieder in seine stabile Bereitschaftsstellung zurückkehrt, indem die Rolle (24) auf der Kurvenfläche (26) in entgegengesetzter Richtung abrollt;
und
- unter der Wirkung von Verzögerungskräften an der Trägheitsmasse (12), deren Betrag den vorbestimmten Wert überschreitet und deren Integral über die Zeit einen vorbestimmten Geschwindigkeitsverlust (Δv) ergibt, die Rolle (24) auf der Kurvenfläche (26) einen Punkt überwindet, jenseits von welchem ein Übertotpunkteffekt eintritt, durch den die Trägheitsmasse (12) das Schlagstück (18) plötzlich zur Betätigung des Ansteuerelementes (30) freigibt.

4. Ansteuermechanismus nach Anspruch 1, 2 oder 3, dadurch gekennzeichnet, daß das Ansteuerelement (30) als Stift oder Bolzen ausgebildet ist, der in einer Bohrung des Gehäuses (10) unter Abdichtung durch eine Ringdichtung abgedichtet ist.

5. Ansteuermechanismus nach einem der vorstehenden Ansprüche, dadurch gekennzeichnet, daß die Trägheitsmasse (12) in ihrer stabilen Bereitschaftsstellung durch ein Sicherungselement arretierbar ist, welches im oder am Gehäuse (10) beweglich gelagert ist und von der Außenseite des Gehäuses her durch eine Gehäuseöffnung hindurch betätigbar ist, und daß die Gehäuseöffnung nach außen abgedichtet ist.

6. Ansteuermechanismus nach einem der vorstehenden Ansprüche, dadurch gekennzeichnet, daß die Trägheitsmasse (12), das Schlagstück (18) und die Rolle (24) jeweils über ein Wälzlager gelagert sind.

7. Ansteuermechanismus nach einem der vorstehenden Ansprüche, dadurch gekennzeichnet, daß an der Trägheitsmasse (12) eine Feder (40) angreift, die den bei Verzögerung auftretenden Kräften entgegenwirkt.

8. Ansteuermechanismus nach Anspruch 7, dadurch gekennzeichnet, daß die Feder (40) über einen abgerundeten Stift reibungsarm auf einer Fläche der Trägheitsmasse (12) abgestützt ist.

9. Ansteuermechanismus nach einem der vorstehenden Ansprüche, dadurch gekennzeichnet, daß die Kurvenfläche (26) einen flachen oder schwach konvex gekrümmten Abschnitt (26c) aufweist, der sich in Richtung der Abrollbewegung erstreckt und an jedem Punkt gegenüber einer zur Langsachse des Schlagstücks (18) senkrechten Ebene geneigt ist.

10. Ansteuermechanismus nach Anspruch 9, dadurch gekennzeichnet, daß der Neigungswinkel (α) zwischen der Kurvenfläche (26) und der genannten Ebene im wesentlichen über die Erstreckung des Abschnitts konstant ist.

11. Ansteuermechanismus nach Anspruch 9 oder 10, dadurch gekennzeichnet, daß der Abschnitt auf seiner einen Seite durch einen Endanschlag und auf seiner anderen Seite durch einen abrupten Rücksprung begrenzt ist.

12. Ansteuermechanismus nach einem der vorstehenden Ansprüche, dadurch gekennzeichnet, daß das Ansteuerelement (30) mit einem Auslösehebel einer mechanischen Rückstrammeinrichtung zusammenwirkt.

13. Ansteuermechanismus nach einem der vorstehenden Ansprüche, dadurch gekennzeichnet, daß das Ansteuerelement (30) mit einem elektrischen Schaltkontakt zusammenwirkt.

14. Ansteuermechanismus nach einem der vorstehenden Ansprüche, dadurch gekennzeichnet, daß das Ansteuerelement (30) als Schlagbolzen ausgebildet ist und mit einer pyrotechnischen Ladung über einen Schlagzünder zusammenwirkt.

## Claims

1. Trigger mechanism for tightening means of a safety belt restraining system or for gas-bag restraining systems in motor vehicles, comprising a vehicle-sensitive inertia mass arranged in a housing and a trigger element which is in operative connection with the restraining system, characterized in that a strike piece (18) pivotally mounted with low friction in the housing (10) and spring-loaded in the direction of the trigger element (30) is provided for actuating said trigger element (30), that the inertia mass (12) is pivotally mounted with low friction in the housing (10), that the strike piece (18) bears via a roller (24) mounted easily movably thereon on a cam face (26) on the inertia mass (12) and that the housing (10) is hermetically sealed.

2. Trigger mechanism according to claim 1, characterized in that in the interior of the housing (10) a moisture-absorbing hygroscopic substance (46) is arranged.

3. Trigger mechanism according to claim 1 or 2, characterized in that the shape of the cam face (26), the movement path of the roller (24) in the pivot movement of the spring-loaded strike piece (18) and the direction of movement of the inertia mass (12) are adapted to each other in such a manner that:
- the strike piece (18) is held in a stable readiness position spaced from the trigger element (30) as long as no deceleration forces exceeding a predetermined value occur at the inertia mass (12);
- the roller (24) rolls on the cam face (26) of the inertia mass (12) oppositely to the spring action on the strike piece (18) when deceleration forces exceeding the predetermined value occur at the inertia mass (12), and when the deceleration forces decrease the strike piece (18) again returns to its stable readiness position in that the roller (24) rolls on the cam face (26) in the opposite direction;
and
- under the action of deceleration forces at the inertia mass (12) having a magnitude exceeding the predetermined value and an integral with respect to time giving a predetermined velocity loss (Δ v), the roller (24) on the cam face (26) overcomes a point beyond which an over-deadcentre effect occurs by which the inertia mass (12) suddenly releases the strike piece (18) for actuation of the trigger element (30).

4. Trigger mechanism according to claim 1, 2 or 3, characterized in that the trigger element (30) is formed as pin or bolt which is sealed in a bore of the housing (10) by means of a ring seal.

5. Trigger mechanism according to any one of the preceding claims, characterized in that the inertia mass (12) is arrestable in its stable readiness position by a securing element which is movably mounted in or on the housing (10) and is actuable from the outside of the housing through a housing opening, and that the housing opening is sealed towards the outside.

6. Trigger mechanism according to any one of the preceding claims, characterized in that the inertia mass (12), the strike piece (18) and the roller (24) are each mounted via a rolling bearing.

7. Trigger mechanism according to any one of the preceding claims, characterized in that a spring (40) acts on the inertia mass (12) opposing the forces occurring on deceleration.

8. Trigger mechanism according to claim 7, characterized in that the spring (40) is supported with low friction via a rounded pin on a face of the inertia mass (12).

9. Trigger mechanism according to any one of the preceding claims, characterized in that the cam face (26) has a flat or weakly convexly curved portion (26c) which extends in the direction of the rolling movement and at each point is inclined to a plane perpendicular to the longitudinal axis of the strike piece (18).

10. Trigger mechanism according to claim 9, characterized in that the inclination angle (α) between the cam face (26) and said plane is substantially constant over the extent of the portion.

11. Trigger mechanism according to claim 9 or 10, characterized in that the portion is limited at its one side by an end stop and at its other side by an abrupt jump back.

12. Trigger mechanism according to any one of the preceding claims, characterized in that the trigger element cooperates with a release lever of a mechanical restraining means.

13. Trigger mechanism according to any one of the preceding claims, characterized in that the trigger element cooperates with an electrical switch contact.

14. Trigger mechanism according to any one of the preceding claims, characterized in that the trigger element is formed by a firing pin and cooperates with a pyrotechnical charge via an impact igniter.

## Revendications

1. Mécanisme de déclenchement de dispositifs de rétraction d'un système de retenue à ceinture de sécurité ou de systèmes de retenue à sac de gaz pour véhicules, comprenant une masse d'inertie sensible au véhicule, disposée dans un boîtier, ainsi qu'un élément de déclenchement qui est en relation fonctionnelle avec le système de retenue, caractérisé en ce qu'une pièce de percussion (18) montée pivotante avec faible frottement dans le boîtier (10) et soumise à la force d'un ressort orientée vers l'élément de déclenchement (30) est prévue pour l'actionnement de cet élément de déclenchement (30), en ce que la masse d'inertie (12) est montée pivotante avec faible frottement dans le boîtier (10), en ce que la pièce de percussion (18) prend appui sur une surface de came (26) de la masse d'inertie (12) par l'intermédiaire d'un galet (24) monté librement sur lui et en ce que le boîtier (10) est fermé hermétiquement.

2. Mécanisme de déclenchement selon la revendication 1, caractérisé en ce qu'une substance hygroscopique (46) qui absorbe l'humidité est placée à l'intérieur du boîtier (10).

3. Mécanisme de déclenchement selon la revendication 1 ou 2, caractérisé en ce que la forme de la surface de came (26), la voie de déplacement du galet (24) en cas de mouvement de pivotement de la pièce de percussion (18) soumise à la force d'un ressort et le sens de déplacement de la masse d'inertie (12) sont corrélés de manière que :
- la pièce de percussion (18) soit tenue à une position stable d'attente à distance de l'élément de déclenchement (30) aussi longtemps qu'aucune force de décélération dépassant une valeur prédéterminée ne s'exerce sur la masse d'inertie (12) ;
- le galet (24) roule sur la surface de came (26) de la masse d'inertie (12) contre la force de ressort s'exerçant sur la pièce de percussion (18) lorsque la masse d'inertie (12) subit des forces de décélération qui dépassent la valeur prédéterminée et, lorsque les forces de décélération décroissent, la pièce de percussion (18) retourne à sa position stable d'attente alors que le galet (24) roule en sens opposé sur la surface de came (26) ; et
- l'action de forces de décélération s'exerçant sur la masse d'inertie (12), dont la grandeur dépasse la valeur prédéterminée et dont l'intégrale est telle qu'il en résulte en fonction du temps une perte prédéterminée de vitesse (Δv) ait pour conséquence que le galet (24) dépasse sur la surface de came (26) un point au-delà duquel se produit un effet de dépassement d'un point d'instabilité qui a pour conséquence que la masse d'inertie (12) libère brusquement la pièce de percussion (18) pour l'actionnement de l'élément de déclenchement (30).

4. Mécanisme de déclenchement selon la revendication 1, 2 ou 3,caractérisé en ce que l'élément de déclenchement (30) est conformé en broche ou tige qui est montée dans un trou du boîtier (10) d'une manière hermétique produite par un joint annulaire.

5. Mécanisme de déclenchement selon l'une des revendications précédentes, caractérisé en ce que la masse d'inertie (12) est immobilisable à sa position stable d'attente par un élément de blocage qui est monté mobile dans ou sur le boîtier (10) et qu'il est possible d'actionner par le côté extérieur du boîtier par un trou du boîtier et en ce que le trou du boîtier est obturé de manière hermétique vis-à-vis de l'extérieur.

6. Mécanisme de déclenchement selon l'une des revendications précédentes, caractérisé en ce que la masse d'inertie (12), la pièce de percussion (18) et le galet (24) sont montés chacun sur un roulement à billes.

7. Mécanisme de déclenchement selon l'une des revendications précédentes, caractérisé en ce qu'un ressort (40) qui attaque la masse d'inertie (12) agit à l'encontre des forces apparaissant en cas de décélération.

8. Mécanisme de déclenchement selon la revendication 7, caractérisé en ce que le ressort (40) prend appui contre une surface de la masse d'inertie (12) avec faible frottement par l'intermédiaire d'une broche arrondie.

9. Mécanisme de déclenchement selon l'une des revendications précédentes, caractérisé en ce que la surface de came (26) comprend une partie (26c) qui est plane ou présente une courbure faiblement convexe, qui est orientée dans la direction du mouvement de roulement et qui est inclinée en chaque point sur un plan perpendiculaire à l'axe longitudinal de la pièce de percussion (18).

10. Mécanisme de déclenchement selon la revendication 9, caractérisé en ce que l'angle d'inclinaison (α) entre la surface de came (26) et ledit plan est sensiblement constant sur la longueur de la partie.

11. Mécanisme de déclenchement selon la revendication 9 ou 10, caractérisé en ce que la partie est délimitée d'un côté par une butée de fin de course et, de l'autre côté, par un retrait abrupt.

12. Mécanisme de déclenchement selon l'une des revendications précédentes, caractérisé en ce que l'élément de déclenchement (30) coopère avec un levier de libération d'un dispositif mécanique de rétraction.

13. Mécanisme de déclenchement selon l'une des revendications précédentes, caractérisé en ce que l'élément de déclenchement (30) coopère avec un contact électrique de commutation.

14. Mécanisme de déclenchement selon l'une des revendications précédentes, caractérisé en ce que l'élément de déclenchement (30) est conformé en broche de percussion et coopère avec une charge pyrotechnique par l'intermédiaire d'une amorce à percussion.
